# EUROPEAN PATENT APPLICATION

(11) **EP 4 675 846 A1**
(43) Date of publication of application: **07.01.2026**
(21) Application number: 25174991.7
(22) Date of filing: 08.05.2025
(51) Int. Cl.: H01M 50/595, H01M 50/152, H01M 50/531, H01M 50/586, H01M 50/591

(54) **A CYLINDRICAL BATTERY WITH AN INSULATION ASSEMBLY**

(30) Priority: 08.05.2024 CN 202410564672
(71) Applicant: Techtronic Cordless GP, Anderson, SC 29621 (US)
(72) Inventor: YI, Ding Xing, Dongguan City, Guangdong Province (CN); HAN, Zhi Qing, Dongguan City, Guangdong Province (CN)
(74) Representative: Meissner Bolte Partnerschaft mbB

(57) **Abstract**

The present invention provides a cylindrical battery with an insulation assembly, the cylindrical battery comprising: an outer housing; a rolled core accommodated in the outer housing; and an insulation assembly. The insulation assembly is positioned between the outer housing and the rolled core, and is configured to separate a portion of the rolled core from the outer housing, wherein the insulation assembly comprises: an insulating cap and insulating tape; the insulating cap comprises: a neck part, the neck part having a central through hole; a skirt part, the skirt part being perpendicular to the neck part; and a corner part, the corner part connecting the neck part and the skirt part; the insulating tape is used for winding on a side face of an upper part of the rolled core, and the skirt part of the insulating cap at least partially covers the insulating tape. The insulation assembly and the cylindrical battery containing the insulation assembly of the present invention can achieve a lower assembly difficulty, a greater operational displacement tolerance, and can achieve safe and stable assembly and connection of a wound battery.

## Description

### Technical field

The present invention relates to the field of batteries, in particular a cylindrical battery with an insulation assembly.

### Background art

Batteries or battery packs are crucial for providing power to many electronic devices used daily. Batteries formed by rolled cores that are compositely formed by winding are called wound batteries. They are widely favoured in the field of energy storage, with a larger startup current, good shock-resistant capability, and excellent high and low temperature performances and cycle life. A cylindrical wound battery generally comprises an anode and a cathode; the anode and the cathode are wound together cylindrically, small gaps being provided between concentric layers of the roll, which is placed in a battery outer shell, and an electrical terminal being arranged at either end of the outer shell. In the wound battery, an electrically conductive sheet generally extends along the length of the cathode and/or anode. An electrically conductive sheet of each concentric layer of the rolled core can contact another electrically conductive sheet of each concentric layer of the rolled core in a friction region, such that they can form a connection point to effectively electrically connect to an electrical terminal of the battery outer shell. Therefore, an insulation assembly is needed to provide electrical insulation between other electrically conductive surfaces of a battery unit and the friction region.

The electrical insulation of the wound battery is required to insulate the rolled core from the battery housing, and to insulate the rolled core from an end cover. However, during a process of actually assembling the battery, when an existing insulating cap is fitted to the rolled core, if displacement relative to an end face of the rolled core occurs during assembly, then when downward pressure is applied, deformation occurs where the rolled core is abutted first, and further downward pressure may cause the insulating cap to partially fold and fit closely to the end face of the rolled core, or interfere with the rolled core, causing a separator and an electrode sheet to fold, which creates a safety hazard in the produced rolled core.

Therefore, there is a need for an improved insulation assembly design, which has a lower assembly difficulty, a greater operational displacement tolerance, and can achieve safe and stable assembly and connection of a wound battery.

### Summary of the invention

An object of the present invention is to provide a cylindrical battery with an insulation assembly. The insulation assembly and the cylindrical battery containing the insulation assembly of the present invention can achieve a lower assembly difficulty, a greater operational displacement tolerance, and can achieve safe and stable assembly and connection of a wound battery.

One aspect of the present invention provides a cylindrical battery with an insulation assembly, the cylindrical battery comprising:
an outer housing;
a rolled core accommodated in the outer housing; and
an insulation assembly,
wherein the insulation assembly is positioned between the outer housing and the rolled core, and is configured to separate a portion of the rolled core from the outer housing,
wherein the insulation assembly comprises:
   an insulating cap, the insulating cap comprising:
      a neck part, the neck part having a central through hole;
      a skirt part, the skirt part being perpendicular to the neck part; and
      a corner part, the corner part connecting the neck part and the skirt part;
         and
   insulating tape, the insulating tape being used for winding on a side face of an upper part of the rolled core, and the skirt part of the insulating cap at least partially covering the insulating tape.

In one embodiment, a lower edge of the skirt part has an oblique angle to facilitate mounting on the rolled core.

In one embodiment, the skirt part is provided with one or more cut slits remote from the neck part.

In one embodiment, the cut slits are located at an edge of the skirt part and centred in a symmetric distribution around an axis of the skirt part.

In one embodiment, the cut slit is a rectangular opening, a depth of the cut slit is 0.2 to 0.5 times a height of the skirt part, preferably 0.25 times; a width of the cut slit is 0.5 to 1 times the depth, preferably 0.75 times.

In one embodiment, the cut slit is an arc-shaped opening, a depth of the cut slit is 0.2 to 0.5 times a height of the skirt part, preferably 0.25 times; a width of the cut slit is 0.5 to 1 times the depth, preferably 0.75 times.

In one embodiment, the skirt part is provided with at least three cut slits, preferably three to eight cut slits, and more preferably six cut slits.

In one embodiment, a material of the insulating cap is perfluoroalkoxy alkane or polyethylene terephthalate.

In one embodiment, the material of the insulating tape is heat shrink tape.

In one embodiment, the insulating tape is further wound on a top face of the rolled core.

In one embodiment, a height of the insulating tape wound on the side face of the rolled core is greater than a height of a skirt part of an insulating cap.

In one embodiment, a height of the insulating tape wound on the side face of the rolled core is 1/3 - 1/7 a height of the rolled core.

In one embodiment, the insulating tape is arranged between the rolled core and the insulating cap and forms a certain angle with the rolled core, wherein the angle is toward the rolled core.

In one embodiment, an angle formed between the insulating tape and rolled core is less than 15°, preferably less than 10°, and more preferably less than 5°.

In one embodiment, a diameter of the skirt part of the insulating cap is larger than a diameter of the rolled core, and smaller than a diameter of the outer housing.

In one embodiment, the battery further comprises a current collector, the current collector comprising a welding part and a protruding part; the welding part is connected to an end part of the rolled core, and the protruding part extends through a central through hole of the insulating end cover.

In one embodiment, the top of the insulating cap is provided with a boss.

Other features and advantages of the present invention are expounded in the detailed description below, and, for a person skilled in the art, according to this description, these will be obvious, or recognized by implementing the embodiments as described below and described together with the claims and drawings.

It will be understood that the general description above and detailed description below are exemplary, and are merely intended to provide an overview or framework for understanding the nature and features of the present invention and the attached claims. As a non-limiting example, multiple features of the present invention can be combined with each other according to the embodiments below.

### Brief description of the drawings

To better understand the above and other objectives, features, advantages and functions of the present invention, reference may be made to the preferred embodiments shown in the drawings. In the drawings, identical reference signs denote identical components. It should be understood by a person skilled in the art that the drawings are intended to schematically illustrate preferred embodiments of the present invention, without imposing any limitations on the scope of the present invention, and that the various components in the drawings are not drawn to scale.
Fig. 1 shows a cross section drawing of an insulation assembly according to some embodiments;
Fig. 2 shows a 3D drawing of an insulating cap according to some embodiments;
Fig. 3 shows a 3D drawing of an insulating cap according to some embodiments from another angle;
Fig. 4 shows a drawing of an assembled structure of an insulating cap and a rolled core according to some embodiments;
Fig. 5 shows a partially enlarged view of a cross section of an assembled structure according to an embodiment of the present invention;
Fig. 6 shows a partially enlarged view of a cross section of an assembled structure according to a comparative example of a conventional design in the art;
Fig. 7 shows an exploded view of a battery assembly according to some embodiments.

### Key to the drawings

100 insulation assembly
110 insulating cap
111 neck part
112 central through hole
113 skirt part
114 cut slit
115 corner part
116 boss
120 insulating tape
200 outer housing
300 current collector
310 welding part
320 protruding part
400 rolled core
410 electrode sheet
420 end part
430 electrically conductive sheet
900 cylindrical battery

### Detailed description of embodiments

Specific embodiments of the present invention are now described in detail with reference to the drawings. Only preferred embodiments of the present invention are described here; those skilled in the art could conceive of other ways of realizing the present invention on the basis of these preferred embodiments, said other ways likewise falling within the scope of the present invention.

Unless otherwise explicitly specified, it is not intended that any apparatus is required to have a specific orientation. Therefore, for any apparatus claim where an order or direction of individual components is not actually described, or if, in the Claims or the Description, no other particular specification is made that steps must be limited to a specific order, or a specific order or direction of components of an apparatus is not described, it is not intended in any way for the order or direction thereof to be inferred.

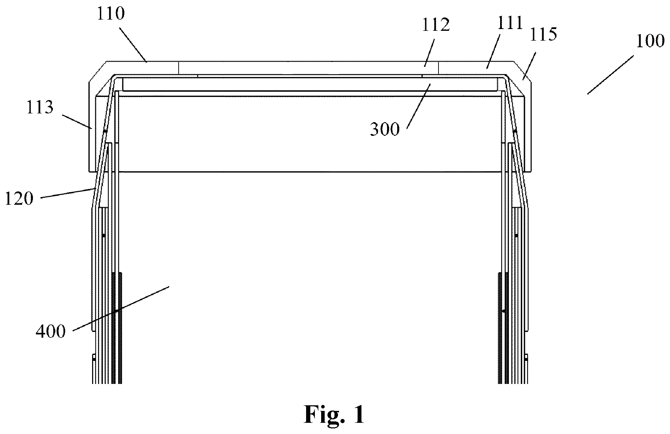

Figs. 1 to 7 respectively show an insulation assembly for a cylindrical battery according to the present invention, and a cylindrical battery containing the insulation assembly. First of all, it must be explained that directional and positional terms in the present invention should be understood to mean relative directions and positions, not absolute directions and positions. The directional and positional terms in the present invention may be interpreted with reference to the exemplary structures shown in Figs. 1 to 7.

In the course of implementing production and research, the inventor discovered that to improve the shock resistance of a battery and achieve mechanical stability during battery assembly, the dimensions of components of various parts must be controlled as precisely as possible, but this makes battery assembly challenging. For example, during actual assembly, if displacement of an existing insulating cap relative to an end face of the rolled core occurs, then when downward pressure is applied, deformation occurs where the rolled core is abutted first, with the result that an edge sheet deforms, causing a separator and an electrode sheet to fold and be damaged, which creates a safety hazard in the produced battery. To address the above technical problem, the applicant has provided an improved insulation assembly for a cylindrical battery. In one embodiment, the insulation assembly provides an insulating cap and insulating tape. The insulating tape covers an electrode of a rolled core, and may provide an additional insulating function while improving shock resistance and stability; moreover, by forming a certain angle relative to the rolled core, the insulating tape acts as a guide for the insulating cap. In one embodiment, a skirt part of an insulating cap may have a cut slit, so as to be able to easily deform during assembly, improving operational redundancy. The insulating tape may further prevent an electrode of the rolled core from possible contact with an outer housing through the cut slit.

Now referring to Fig. 1, according to a first aspect of the present invention, a cylindrical battery is provided, the cylindrical battery comprising an outer housing 200, a rolled core 400 accommodated in the outer housing, and an insulation assembly 100, wherein the insulation assembly 100 is positioned between the outer housing 200 and the rolled core 400, and is configured to separate a portion of the rolled core 400 from the outer housing 200. In one embodiment, the insulation assembly 100 comprises an insulating cap 110 and insulating tape 120. The insulating cap 110 comprises: a neck part 111, the neck part 111 having a central through hole 112; a skirt part 113, the skirt part 113 being perpendicular to the neck part 111; and a corner part 115, the corner part 115 connecting the neck part 111 and the skirt part 113. The insulating tape 120 is used for winding on a side face of an upper part of the rolled core 400, and the skirt part 113 of the insulating cap 110 at least partially covers the insulating tape 120. In one embodiment, the insulating tape 120 is arranged inside the insulating cap 110, used for forming additional electrical insulation between an outer housing 200 and a rolled core 400. In one embodiment, the neck part 111, skirt part 113 and corner part 115 are integrally formed, wherein a diameter of the skirt part 112 is greater than or equal to a diameter of the neck part 111. As a preferred embodiment, a lower edge of the skirt part 113 has an oblique angle, to facilitate mounting an insulating cap 110 on a rolled core 400. The design of the insulating cap 110 of the present invention can provide good protection for a side of the rolled core, and achieves automatic alignment during assembly, reducing assembly difficulty.

In one embodiment, as shown in Fig. 1, insulating tape 120 is arranged between a rolled core 400 and an insulating cap 110 and forms a certain angle with the rolled core 400, wherein the angle is toward the rolled core 400. In one embodiment, an angle formed between the insulating tape 120 and rolled core 400 is less than 15°, preferably less than 10°, and more preferably less than 5°. At the same time, in some embodiments, a diameter of a skirt part 113 of the insulating cap 110 is larger than a diameter of the rolled core 400 and smaller than a diameter of the outer housing 200. In addition, during assembly, a certain gap is present between an inner surface of the skirt part 113 of the insulating cap 110 and an outer surface of the insulating tape 120. By means of the configuration of the above structure, the insulating cap 110 can be joined to an end part 420 of the rolled core 400 fairly easily, and the mounting process in this case does not easily cause deformation of an edge sheet, and greater operational displacement tolerance can still be retained even with insufficient coaxial alignment; moreover, safe and stable assembly and connection of the wound battery can be achieved.

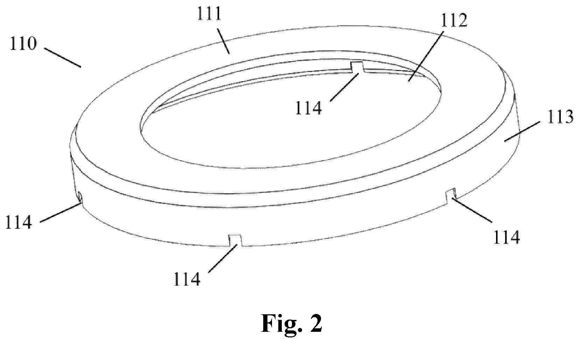

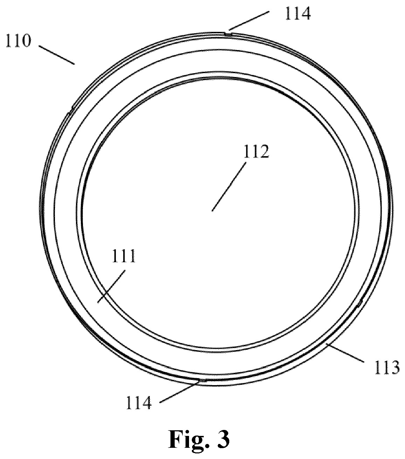

Referring to Figs. 2 and 3, in one embodiment, the skirt part 113 of the insulating cap 110 is provided with one or more cut slits 114 remote from the neck part 111, the cut slits 114 being located at an edge of the skirt part 113 and centred in a symmetric distribution around an axis of the skirt part 113. In one embodiment, the cut slit 114 is a rectangular opening, a depth of the cut slit 114 is 0.2 to 0.5 times a height of the skirt part 113, optionally 0.2 times, 0.25 times, 0.3 times, 0.35 times, 0.4 times, 0.45 times or 0.5 times, and preferably 0.25 times; a width of the cut slit 114 is 0.5 to 1 times the depth, optionally 0.5 times, 0.55 times, 0.6 times, 0.65 times, 0.7 times, 0.75 times, 0.8 times, 0.85 times, 0.9 times, 0.95 times or 1 times, and preferably 0.75 times. In one embodiment, the cut slit 114 is an arc-shaped opening, a depth of the cut slit 114 is 0.2 to 0.5 times a height of the skirt part 113, optionally 0.2 times, 0.25 times, 0.3 times, 0.35 times, 0.4 times, 0.45 times or 0.5 times, and preferably 0.25 times; a width of the cut slit 114 is 0.5 to 1 times the depth, optionally 0.5 times, 0.55 times, 0.6 times, 0.65 times, 0.7 times, 0.75 times, 0.8 times, 0.85 times, 0.9 times, 0.95 times or 1 times, and preferably 0.75 times. In one embodiment, the skirt part 113 is provided with at least two cut slits 114, preferably at least three cut slits 114, more preferably three to eight cut slits 114, and more preferably six cut slits 114. When coaxial alignment of the assembly is insufficient, when a small displacement occurs in placement, deformation of two side edges of cut slits at the bottom of the skirt part 113 can be relied on for easier assembly to the rolled core.

In some embodiments, the insulation assembly 100 is made of an insulating material. The insulating cap 110 and the insulating tape 120 may optionally be the same material or also may optionally be different materials. For example, in some embodiments, the insulating cap 110 may be made of perfluoroalkoxy alkane, polyethylene terephthalate or another insulating material required for the given application. In some embodiments, the material of the insulating tape 120 is heat shrink tape. In some embodiments, the insulation assembly 100 is made of a flexible material, which has a certain ductility and can deform when the insulation assembly 100 contacts the outer housing 200 and the rolled core 400, thereby fully filling contact gaps, improving the shock resistance of the battery.

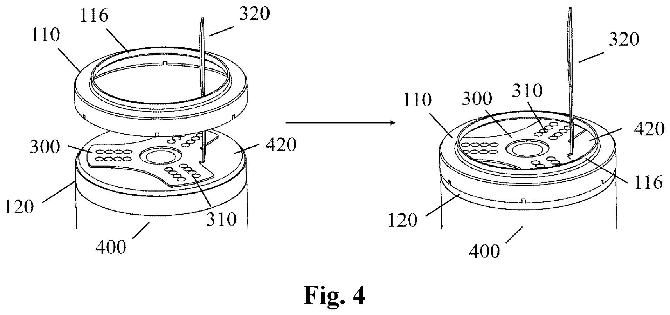

Now referring to Fig. 4, according to a second aspect of the present invention, as a non-limiting embodiment, the present invention provides assembly of a cylindrical battery 900, the battery comprising: a cylindrical outer housing 200, which is used for accommodating a rolled core 400 and other electrical components, the outer housing 200 having sealed bottom and side faces; the rolled core 400, wherein the rolled core 400 is formed by winding together an anode electrode sheet, a cathode electrode sheet and at least one separator, and the rolled core 400 further comprises an electrically conductive sheet 430 that extends along the electrode sheets to an end part 420, used for collecting current to an opposite end part 420 of the rolled core 400; a current collector 300, comprising a positive current collector and a negative current collector, respectively arranged at the end parts 420 of the rolled core 400, wherein each current collector 300 comprises a welding part 310 and a protruding part 320; and the insulation assembly 100 provided according to any embodiment of the first aspect of the present invention. In one embodiment, an insulation assembly 100 is positioned between the outer housing 200 and the rolled core 400, and is configured to separate a portion of the rolled core 400 from the outer housing 200.

Further referring to Fig. 4, as a preferred embodiment, the insulating cap 110 further comprises a boss 116, wherein the design of the boss 116 is beneficial for removal and placement of the insulating cap 110, while further being able to prevent a protruding part 320 of the current collector 300, when folding, from contacting an outer housing 200 and thus causing the cylindrical battery 900 to short circuit.

In one embodiment, the insulating tape 120 is wound on a side face of a rolled core 400. In one embodiment, the insulating tape 120 is further wound on a top face of the rolled core 400. In one embodiment, a height of the insulating tape 120 wound on the side face of the rolled core 400 is greater than a height of a skirt part 113 of an insulating cap 110. The height of the insulating tape 400 wound on the side face affects impregnation of electrolyte in the cell 400. In some embodiments, a height of insulating tape 120 wound on a side face is 1/10, 1/9, 1/8, 1/7, 1/6, 1/5, 1/4, 1/3 or 1/2 a height of a rolled core. In some embodiments, a height of insulating tape 120 wound on a side face is 1/2 to 1/10, 1/2 to 1/9, 1/3 to 1/9, 1/3 to 1/8 or 1/3 to 1/7 a height of a rolled core. Preferably, the height of the insulating tape 120 wound on the side face is 1/3 to 1/7 of the height of the rolled core 400; in this way, the design can achieve an insulating effect well, while not affecting impregnation of electrolyte in the cell 400.

In some embodiments, a welding part 310 of a current collector 300 is joined to an end part of a rolled core 400 by welding in a first aspect; in a second aspect, a protruding part 320 extends through a central through hole 112 of an insulating end cover 110. The neck part 111 of the insulating cap 100 is located between the outer housing 200 and the current collector 300, which ensures electrical contact between a battery terminal and the current collector 300 while preventing electrical contact between the outer housing 200 and the current collector 300.

In some embodiments, the skirt part 113 of the insulating cap 110 is located between the outer housing 200 and the rolled core 400, to prevent electrical contact between the outer housing 200 and the rolled core 400.

In some embodiments, the insulating tape 120 is arranged between the rolled core 400 and the skirt part 113 of the insulating cap 110 and forms a certain angle with the rolled core 400, wherein the angle is toward the rolled core 400, to act as a guide for the insulating cap.

In some embodiments, a diameter of the skirt part 113 of the insulating cap 110 is larger than a diameter of the rolled core 400 and smaller than a diameter of the outer housing 200.

In some embodiments, a welding part 310 of the current collector 300 is connected to an end part 420 of the rolled core 400, and a protruding part 320 extends through a central through hole 112 of an insulating end cover 110.

### Comparative example 1

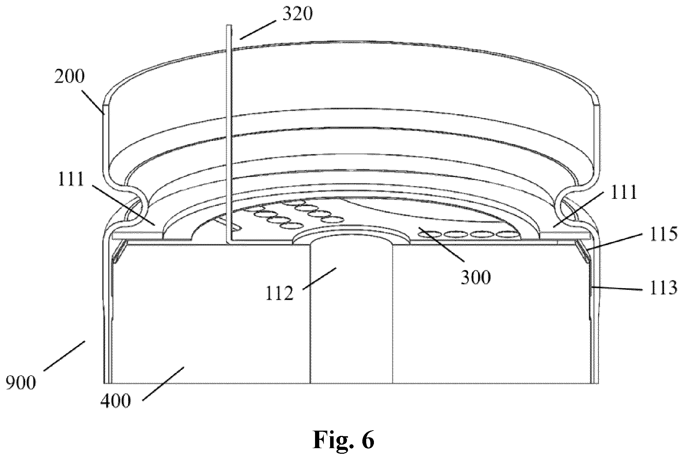

Now referring to Fig. 6, a design for assembly of an insulation assembly 100 and a rolled core 400 conventionally used in the art is provided.

Insulating tape 120 is wrapped on a surface of a welded body of a current collector 300 and a rolled core 400. An insulating cap 110 is only formed from one neck part 111 and covers a surface of the current collector 300, achieving electrical isolation of the rolled core 400 and an outer housing 200 after channelling. In general, once insulating tape has been provided, it is not necessary to add a corner part 115 and a skirt part 113 of an insulating cap 110; however, regarding shock resistance, the capability of the insulating tape 120 to resist vibrations is poor, and the rolled core 400 can easily rock inside the outer housing 200. Therefore, in existing designs, on the basis that an insulation assembly 100 merely containing a neck part 111 and insulating tape 120 is provided, to solve the problems of shock resistance and short circuiting, it is necessary to perform channelling on the outer housing 200; in this case, the neck part 111 is easily squeezed and thus deformed, and leaves a channel position.

### Example 1

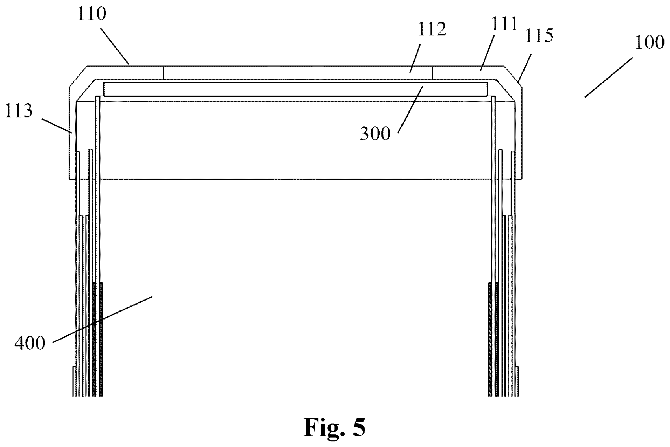

Now referring to Fig. 5, according to an embodiment of the present invention, a design for assembly of an insulation assembly 100 and a rolled core 400 which improves upon the prior art is provided.

Several cut slits 114 are provided on a skirt part 113 of an insulating cap 110; when coaxial alignment of assembly is insufficient, by deformation of the cut slits 114 of the skirt part, the insulating cap 110 is enabled to automatically align coaxially during assembly, and the skirt part 113 of the insulating cap 110 directly abuts an electrode of an outermost layer of a rolled core 400. Moreover, since a diameter of the skirt part 113 of the insulating cap 110 is greater than a diameter of the rolled core 400, while facilitating mounting of the insulating cap 110 and improving the safety of the cell, electrical isolation of the rolled core 400 and an outer housing 200 can also be achieved, and shock resistance of the battery is improved.

### Example 2

Now referring to Fig. 4, according to another embodiment of the present invention, on the basis of example 1, a further improved design for assembly of an insulation assembly 100 and a rolled core 400 is provided.

An extra layer of insulating tape 120 is provided between the skirt part 113 of the insulating cap 110 and the rolled core 400 where they abut each other. The insulating tape 120 is wrapped on a surface of a welded body of a current collector 300 and the rolled core 400 and forms a certain angle with the rolled core 400, wherein the angle is toward the rolled core 400, to act as a guide for the insulating cap. In one embodiment, an angle formed between the insulating tape 120 and rolled core 400 is less than 15°, preferably less than 10°, and more preferably less than 5°. The insulating tape 120 may provide extra electrical insulation for the rolled core 400. To improve mechanical stability and shock resistance of the battery, a skirt edge 113 of an insulating cap 110 is squeezed by a steel shell sidewall in a channelling process of the rolled core 400, thereby preventing unintended separation. The insulating tape 120 may prevent deformation of an insulating cap, providing extra physical isolation and electrical isolation.

Adding insulating tape 120 to the insulating cap 110 can prevent deformation of the insulating cap. Since a side edge of the insulating cap is squeezed by the steel shell sidewall in a channelling process of the cell, unintended separation is prevented. Since the insulating tape already covers a rolled core end face, whether the insulating cap has a channel does not affect mounting thereof. Of course, in another embodiment, the insulating cap may be designed to have a channel.

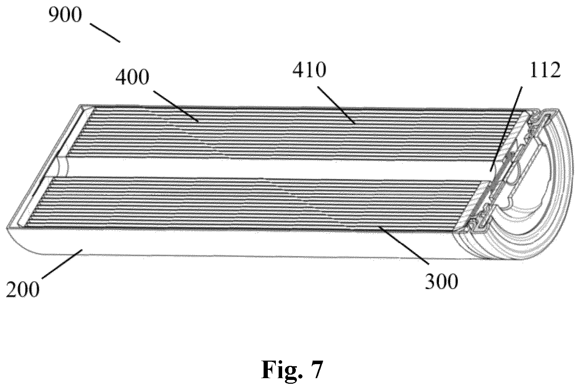

Now referring to Fig. 7, according to a third aspect of the present invention, an assembly method for a cylindrical battery is provided, comprising the following steps: (a) welding a welding part 310 of a current collector 300 to an end part 420 of a rolled core 400, obtaining a welded composite body; (b) winding insulating tape 120 on a surface of the welded composite body in step (a), and forming a certain angle between the insulating tape 120 and the rolled core 400, wherein the angle is toward the rolled core 400, used for acting as a guide structure in an assembly process of an insulating cap 110; (c) passing a protruding part 320 of the current collector 300 through a central opening of the insulating cap 110, and closely joining the insulating cap 110 to the end part 420 of the rolled core 400; (d) inserting the structure obtained in step (c) into an outer housing 200, and performing channelling, pressing and encapsulation on an electrode terminal, obtaining a cylindrical battery 900.

The above description of various embodiments of the present disclosure is provided to a person skilled in the art for descriptive purposes. It is not intended that the present disclosure be exclusive or be limited to a single disclosed embodiment. Based on the above, a person of ordinary skill in the art as taught above will understand various substitutes for and variants of the present disclosure. Therefore, although some alternative embodiments have been specifically described, a person skilled in the art will understand, or develop with relative ease, other embodiments. The present disclosure is intended to include all alternatives, modifications and variants described here, as well as other embodiments falling within the spirit and scope of the present disclosure described above.
Further aspects of the disclosure may be summarized as follows:
1. Cylindrical battery, characterized by comprising:
   an outer housing (200);
   a rolled core (400) accommodated in the outer housing; and
   an insulation assembly (100),
   wherein the insulation assembly (100) is positioned between the outer housing (200) and the rolled core (400), and is configured to separate a portion of the rolled core (400) from the outer housing (200),
   wherein the insulation assembly (100) comprises:
      an insulating cap (110), the insulating cap (110) comprising:
      a neck part (111), the neck part (111) having a central through hole (112);
      a skirt part (113), the skirt part (113) being perpendicular to the neck part (111); and
      a corner part (115), the corner part (115) connecting the neck part (111) and the skirt part (113); and insulating tape (120), the insulating tape (120) being used for winding on a side face of an upper part of the rolled core (400), and the skirt part (113) of the insulating cap (110) at least partially covering the insulating tape (120).
2. Cylindrical battery according to aspect 1, characterized in that: a lower edge of the skirt part (113) has an oblique angle to facilitate mounting on the rolled core (400).
3. Cylindrical battery according to aspect 1 or 2, characterized in that: the skirt part (113) is provided with one or more cut slits (114) remote from the neck part (111).
4. Cylindrical battery according to any one of the preceding aspects, in particular aspect 3, characterized in that: the cut slits (114) are located at an edge of the skirt part (113) and centred in a symmetric distribution around an axis of the skirt part (113).
5. Cylindrical battery according to any one of the preceding aspects, in particular aspect 3 or 4, characterized in that: the cut slit (114) is a rectangular opening, a depth of the cut slit (114) is 0.2 to 0.5 times a height of the skirt part (113), preferably 0.25 times; a width of the cut slit (114) is 0.5 to 1 times the depth, preferably 0.75 times.
6. Cylindrical battery according to any one of the preceding aspects, in particular aspect 3 or 4, characterized in that: the cut slit (114) is an arc-shaped opening, a depth of the cut slit (114) is 0.2 to 0.5 times a height of the skirt part (113), preferably 0.25 times; a width of the cut slit (114) is 0.5 to 1 times the depth, preferably 0.75 times.
7. Cylindrical battery according to any one of the preceding aspects, in particular aspect 3 or 4, characterized in that: the skirt part (113) has at least three cut slits (114), preferably three to eight cut slits (114), more preferably six cut slits (114).
8. Cylindrical battery according to any one of the preceding aspects, in particular any one of aspects 1 - 4, characterized in that: a material of the insulating cap (110) is perfluoroalkoxy alkane or polyethylene terephthalate.
9. Cylindrical battery according to any one of the preceding aspects, in particular any one of aspects 1 - 4, characterized in that: a material of the insulating tape (120) is heat shrink tape.
10. Cylindrical battery according to any one of the preceding aspects, in particular any one of aspects 1 - 4, characterized in that: the insulating tape (120) is further wound on a top face of the rolled core (400).
11. Cylindrical battery according to any one of the preceding aspects, in particular any one of aspects 1 - 4, characterized in that: a height of the insulating tape (120) wound on the side face of the rolled core (400) is greater than a height of the skirt part (113) of the insulating cap (110).
12. Cylindrical battery according to any one of the preceding aspects, in particular any one of aspects 1 - 4, characterized in that: a height of the insulating tape (120) wound on the side face of the rolled core (400) is 1/3 - 1/7 of the height of the rolled core (400).
13. Cylindrical battery according to any one of the preceding aspects, in particular any one of aspects 1 - 4, characterized in that: the insulating tape (120) is arranged between the rolled core (400) and the insulating cap (110) and forms a certain angle with the rolled core (400), wherein the angle is toward the rolled core (400).
14. Cylindrical battery according to any one of the preceding aspects, in particular aspect 13, characterized in that: the angle formed between the insulating tape (120) and rolled core (400) is less than 15°, preferably less than 10°, and more preferably less than 5°.
15. Cylindrical battery according to any one of the preceding aspects, in particular any one of aspects 1 - 4, characterized in that: a diameter of the skirt part (113) of the insulating cap (110) is larger than a diameter of the rolled core (400), and smaller than a diameter of the outer housing (200).
16. Cylindrical battery according to any one of the preceding aspects, in particular any one of aspects 1 - 4, characterized in that: the battery further comprises a current collector (300), the current collector (300) comprising a welding part (310) and a protruding part (320); the welding part (310) is connected to an end part (420) of the rolled core (400), and the protruding part (320) extends through the central through hole (112) of the insulating end cover (110).
17. Cylindrical battery according to any one of the preceding aspects, in particular any one of aspects 1 - 4, characterized in that: the top of the insulating cap (110) is provided with a
   boss (116).

## Claims

1. Cylindrical battery, **characterized by** comprising:
an outer housing (200);
a rolled core (400) accommodated in the outer housing; and
an insulation assembly (100),
wherein the insulation assembly (100) is positioned between the outer housing (200) and the rolled core (400), and is configured to separate a portion of the rolled core (400) from the outer housing (200),
wherein the insulation assembly (100) comprises:
an insulating cap (110), the insulating cap (110) comprising:
a neck part (111), the neck part (111) having a central through hole (112);
a skirt part (113), the skirt part (113) being perpendicular to the neck part (111); and
a corner part (115), the corner part (115) connecting the neck part (111) and the skirt part (113);
and
insulating tape (120), the insulating tape (120) being used for winding on a side face of an upper part of the rolled core (400), and the skirt part (113) of the insulating cap (110) at least partially covering the insulating tape (120).

2. Cylindrical battery according to Claim 1, **characterized in that**: a lower edge of the skirt part (113) has an oblique angle to facilitate mounting on the rolled core (400).

3. Cylindrical battery according to either Claim 1 or Claim 2, **characterized in that**: the skirt part (113) is provided with one or more cut slits (114) remote from the neck part (111).

4. Cylindrical battery according to Claim 3, **characterized in that**: the cut slits (114) are located at an edge of the skirt part (113) and centred in a symmetric distribution around an axis of the skirt part (113).

5. Cylindrical battery according to Claim 3 or 4, **characterized in that**: the cut slit (114) is a rectangular opening or an arc-shaped opening, a depth of the cut slit (114) preferably being 0.2 to 0.5 times a height of the skirt part (113), preferably 0.25 times; a width of the cut slit (114) is 0.5 to 1 times the depth, preferably 0.75 times.

6. Cylindrical battery according to any one of Claims 3 to 5, **characterized in that**: the skirt part (113) has at least three cut slits (114), preferably three to eight cut slits (114), more preferably six cut slits (114).

7. Cylindrical battery according to any one of Claims 1 - 6, **characterized in that**: a material of the insulating cap (110) is perfluoroalkoxy alkane or polyethylene terephthalate.

8. Cylindrical battery according to any one of Claims 1 - 7, **characterized in that**: a material of the insulating tape (120) is heat shrink tape.

9. Cylindrical battery according to any one of Claims 1 - 8, **characterized in that**: the insulating tape (120) is further wound on a top face of the rolled core (400).

10. Cylindrical battery according to any one of Claims 1 - 9, **characterized in that**: a height of the insulating tape (120) wound on the side face of the rolled core (400) is greater than a height of the skirt part (113) of the insulating cap (110), preferably, 1/3 - 1/7 of the height of the rolled core (400).

11. Cylindrical battery according to any one of Claims 1 - 10, **characterized in that**: the insulating tape (120) is arranged between the rolled core (400) and the insulating cap (110) and forms a certain angle with the rolled core (400), wherein the angle is toward the rolled core (400).

12. Cylindrical battery according to Claim 11, **characterized in that**: the angle formed between the insulating tape (120) and rolled core (400) is less than 15°, preferably less than 10°, and more preferably less than 5°.

13. Cylindrical battery according to any one of Claims 1 - 12, **characterized in that**: a diameter of the skirt part (113) of the insulating cap (110) is larger than a diameter of the rolled core (400), and smaller than a diameter of the outer housing (200).

14. Cylindrical battery according to any one of Claims 1 - 13, **characterized in that**: the battery further comprises a current collector (300), the current collector (300) comprising a welding part (310) and a protruding part (320); the welding part (310) is connected to an end part (420) of the rolled core (400), and the protruding part (320) extends through the central through hole (112) of the insulating end cover (110).

15. Cylindrical battery according to any one of Claims 1 - 14, **characterized in that**: the top of the insulating cap (110) is provided with a boss (116).
